# EUROPEAN PATENT SPECIFICATION

(11) **EP 3 706 959 B1**
(45) Date of publication and mention of the grant of the patent: **26.01.2022**
(21) Application number: 19715264.8
(22) Date of filing: 07.02.2019
(51) Int. Cl.: B25F 1/00, B66F 1/06, B66F 13/00, B05C 17/01

(54) **HANDHELD JACKING/LEVELLING-TOOL**
HANDGEFÜHRTES HEBE-/NIVELLIERWERKZEUG
OUTIL DE LEVAGE/MISE À NIVEAU PORTATIF

(30) Priority: 16.02.2018 NO 20180251
(43) Date of publication of application: 16.09.2020
(73) Proprietor: Viking Arm AS, 0250 Oslo (NO)
(72) Inventor: OYVIND, Resch, 0250 Oslo (NO); TERJE, Scheen, 1449 Drobak (NO)
(74) Representative: Tandberg
(86) International application number: PCT/NO2019/000003
(87) International publication number: WO 2019/160424

(56) References cited:
- CN-A- 102 815 641
- DE-U1-202012 004 735
- US-A- 5 622 355
- US-A1- 2007 181 607
- US-A1- 2012 266 428
- US-A1- 2015 052 718

## Description

### Field of invention

The invention relates to a hand tool more specifically to hand operated jacking tool that can be used for a number of task like lifting and levelling of objects, tightening of ropes or straps, separation of things etc.

### Background

A caulking gun is well known in the tool industry and has been on the market for several decades. They include a pumping or jacking mechanism for example described in US 4009804. This mechanism is cheap and easy to produce and has minimal friction. In view of the invention according to claim 1, CN102815641A does not disclose that the tool is hand-held and the jacking mechanism is a caulking gun jacking mechanism. Other examples of devices are also shown in US5622355A, US2012/266428A1 or DE202012004735U1.

In the building industry the need for a combination of lifting, holding and levelling of objects like doors, windows or beams is often encountered. A toe jack may be used for this purpose, but is only found in heavy duty versions. A toe jack is usually a jack with two fixed outer feet and a middle foot that can be jacked in an upward and sometimes downward direction. Up to now it has not been possible to find a lightweight hand held toe jack that can be operated with one hand. This invention represents a cheap and easy solution to this problem.

### Summary of invention

The invention describes a hand held jacking/levelling-tool comprising a jacking shaft and a frame moving relative to each other during jacking action, and a caulking gun jacking mechanism providing the jacking action. It further comprises two outer legs fastened to one of the frame and the jacking shaft. The jacking tool further comprises one middle leg fastened to the other of the frame and the jacking shaft, and is positioned between a left and right outer leg. The jacking-tool further comprises a foot fastened at a right angle to each leg and pointing in the same directions. The jacking action causes the jacking shaft to move downward through the frame.

### Brief description of the drawings

For better understanding of the invention the device will be described with reference to the figures. Like numerals describe like parts in the different figures. The figures illustrates examples of the invention
**Fig. 1a****, b, c and d**, shows a jacking shaft with a middle foot, and also two outer feet to be fastened to the frame from different perspectives.
**Fig. 2a****, b and c**, shows the jacking shaft and three legs fastened to a caulking gun jacking mechanism.
**Fig. 3** shows an embodiment wherein the middle foot has a support plate attached.
**Fig. 4** shows an embodiment wherein the middle foot ha a rear support attached.
**Fig. 5** shows an embodiment wherein all three feet having the same shape.
**Fig. 6** shows a jacking shaft with jagged edges.

### Detailed description of preferred embodiments.

In this text we shall assume that the hand held jack is standing upright with the feet down. Left and right is as seen from the rear. The handle is at the rear and the feet are pointing forward. We will not describe the caulking gun jacking mechanism in detail as this is well known to a skilled person.

The invention describes a hand held jacking/levelling-tool comprising a jacking shaft 2 and a frame 3 moving relative to each other. The jacking tool further comprises a jacking mechanism 1 providing jacking action between the jacking shaft and frame 3. Furthermore the jacking tool comprises two outer legs 5, 7 fastened to one of the frame 3 and the jacking shaft 2, and one middle leg 6 fastened to the other of the frame and the jacking shaft, and being positioned between the outer legs 5, 7. The jacking tool also comprises a foot (8, 9, 10) fastened at a right angle to each leg 5, 6, 7 and pointing in the same directions,

In other words we have two configurations of the legs 1. One leg fastened to the jacking shaft and two fastened to the frame. 2.Two legs fastened to the jacking shaft and one fastened to the frame. In configuration 1 the jacking shaft 2 and middle leg 6 is integrated with each other. Whilst in configuration 2 the difference between the legs and the shaft becomes apparent.

The relation between the feet, legs, jacking shaft and frame is depicted in f**ig. 1a-d** and configuration 2 is not shown.

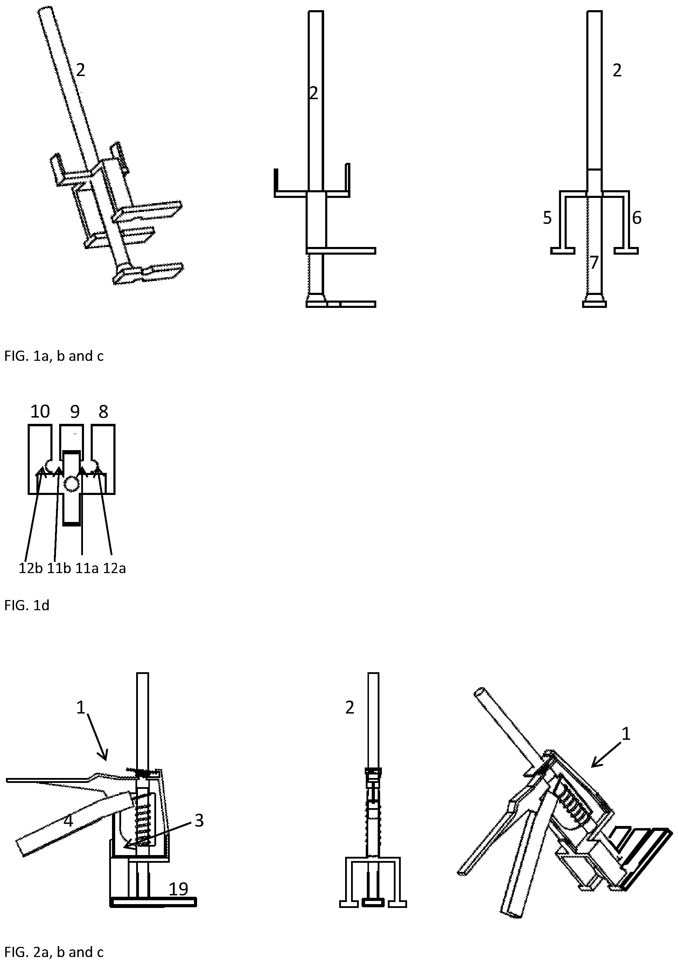

A preferred embodiment of the jacking mechanism 1 is a caulking gun jacking mechanism as shown in different perspectives in fig. 2a-c. This is very light weight and has almost no friction. Almost all energy spent operating a handle 4 will be transferred to movement of the jacking shaft 2. The cross section of the jacking shaft may be square, rectangular, circular or oval. In a preferred embodiment the jacking shaft is a rounded flat bar. The cross section of such a jacking shaft is a rounded rectangle with a shorter rear and front side. The jacking shaft has the same cross section along its entire length. Obviously the jacking shaft is oriented with the longer sides of the cross section parallel with a rear to front direction.

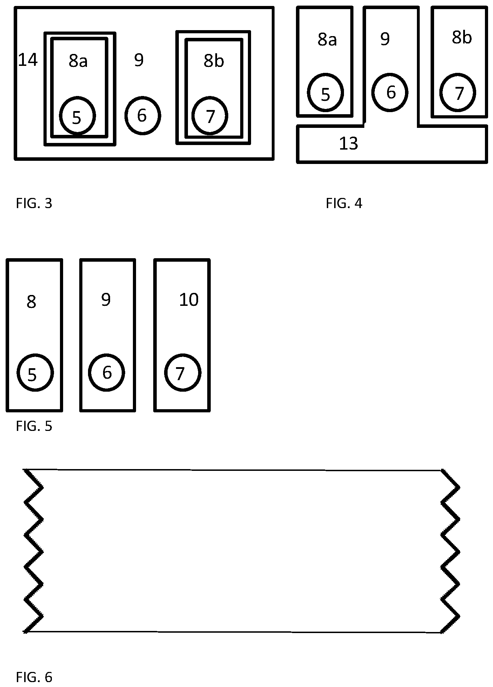

However the caulking gun mechanism may slip when subjected to vibrations or chocks. This can be mitigated by using small teeth, a jagged edge or similar shapes on a rear and / or front side of the jacking shaft 2, as shown in fig. 6. Normally it would be the rear side of the jacking shaft which engages with the jacking mechanism. The jagged edge should have shapes corresponding to jacking parts in the caulking gun jacking mechanism. The shaft may have jagged edges on one or both of the front and rear side.

In a preferred embodiment the middle leg is fastened to the jacking shaft. This is the simplest configuration due to the construction of the caulking gun jacking mechanism. When operating the jacking mechanism the jacking action causes the middle leg 6 fastened to the jacking shaft 2 to move away from the frame 3. If the middle leg is fastened to the frame the left and right leg must be fastened to the jacking shaft. This puts restrictions on the movement of the jacking shaft because the middle leg would come into conflict with the jacking shaft and/or outer legs. Hence this is a less preferable embodiment.

In another embodiment the jacking mechanism comprises mating threads on the jacking shaft and a nut fastened to the frame. In yet another embodiment the jacking mechanism comprises a pitch rack on the jacking shaft. A pinion of suitable configuration must be connected to the rack or nut in the respective embodiments. These two embodiments may easily be powered by hydraulics, electricity or pneumatics.

In one embodiment the hand held jacking-tool is used for tightening a rope. For this purpose the middle foot 9 has an indent 11a, 11b on each side, preferably close to the leg describing half a circle and wherein each of the left 8 and right 10 foot has a corresponding indent 12b, 12a on their respective left and right sides, as seen in fig. Id. If a rope is looped under the middle foot 9 and over the outer feet 8, 10, then the rope will be tightened if the middle leg is pushed downward. To ease the threading it is advantageous if an initial position comprises the middle foot being positioned closer to the frame than the left and right foot. A strap may also be tightened with or without the indents. A distance between the feet will allow easy threading of ropes or straps.

In one embodiment an upper part of the frame including the jacking mechanism and jacking handle is rotably mounted to a lower part of the frame and may rotate around the jacking shaft. This feature is simple to include if the jacking shaft is round.

In another embodiment the handheld jacking/levelling-tool has a support plate (14) attached in same plane as the feet as shown in fig. 3. The support plate may surround the two outer feet. The support plate will distribute the weight to a wider area and provide increased stability. In another embodiment, the middle foot 9 is provided with a rear support (13) as shown in fig. 4. The rear support is a plate attached to the rear of the middle foot and extends towards the sides in the same plane as the feet. Fig. 5 shows an embodiment with three feet of same shape.

### Inventory

1 Jacking mechanism
2 Jacking shaft
3 Frame
4 Handle
5 Left leg
6 Middle leg
7 Right leg
8 Left foot
9 Middle foot
10 Right foot
11a, b Right and left indent on middle foot
12a, b Indents on right and left feet
13 Rear support
14 Support plate

## Claims

1. Hand held jacking/levelling-tool comprising:
a jacking shaft (2) and a frame (3) moving relative to each other during jacking action,
a caulking gun jacking mechanism (1) providing the jacking action,
wherein
two outer legs (5, 7) fastened to one of the frame (3) and the jacking shaft (2), one middle leg (6) fastened to the other of the frame and the jacking shaft, and
being positioned between the outer leg (5, 7), a foot (8, 9, 10) fastened at a right angle to each leg (5, 6, 7) and pointing in the same directions,
wherein the jacking action causes the jacking shaft (2) to move downward through the frame (3).

2. Jacking/levelling-tool according to claim 1, **characterized in that** the two outer legs (5, 7) are fastened to the frame (3) and the one middle leg (6) is fastened to the jacking shaft (2).

3. Jacking/levelling-tool according to claim 1, **characterized in that** a support plate (14) is attached to the middle foot surrounding both of the two outer feet.

4. Jacking/levelling-tool according to claim 1 and 2, **characterized in that** the middle foot has a rear support (13) extending in the same plane as the middle foot.

5. Jacking/levelling-tool according to claim 1, **characterized in that** the jacking shaft is a rounded flat bar.

6. Jacking/levelling-tool according to claim 1 **characterized in that** an initial position comprises the middle foot being positioned closer to the frame than the left and right foot.

7. Jacking/levelling-tool according to claim 1, **characterized in that** the middle foot has an indent (11a, 12a) on each side close to the leg describing half a circle and wherein each of the left (8) and right (10) foot has a corresponding indent (11b, 12b) on their respective right and left sides.

8. Jacking-tool according to claim 1, **characterized in that** all feet has the same cross-section.

9. Jacking-tool according to claim 1, **characterized in that** the jacking shaft has a cross section like a rounded rectangle with a shorter rear and front side and wherein the longer sides are parallel with a rear to front direction.

10. Jacking-tool according to claim 1, **characterized in that** the jacking shaft has a jagged edge on one or both sides

## Patentansprüche

1. Handgehaltenes Hebe-/Nivellierungwerkzeug, umfassend:
eine Hebewelle (2) und einen Rahmen (3), die sich während einer Hebewirkung relativ zueinander bewegen,
einen Stemmkanonenhebemechanismus (1), der die Hebewirkung bereitstellt,
wobei zwei äußere Schenkel (5, 7) an einem von dem Rahmen (3) und der Hebewelle (2) befestigt sind,
ein mittlerer Schenkel (6) am anderen von dem Rahmen und der Hebewelle befestigt ist und zwischen dem äußeren Schenkel (5, 7) angeordnet ist,
ein Fuß (8, 9, 10) rechtwinklig zu jedem Schenkel (5, 6, 7) befestigt ist und in die gleichen Richtungen zeigt,
wobei die Hebewirkung bewirkt, dass sich die Hebewelle (2) nach unten durch den Rahmen (3) bewegt.

2. Hebe-/Nivellierungswerkzeug nach Anspruch 1, **dadurch gekennzeichnet, dass** die beiden äußeren Schenkel (5, 7) an dem Rahmen (3) befestigt sind und der mittlere Schenkel (6) an der Hebewelle (2) befestigt ist.

3. Hebe-/Nivellierungswerkzeug nach Anspruch 1, **dadurch gekennzeichnet, dass** eine Trägerplatte (14) an dem mittleren Fuß befestigt ist, die beide der zwei äußeren Füße umgibt.

4. Hebe-/Nivellierungswerkzeug nach Anspruch 1 und 2, **dadurch gekennzeichnet, dass** der mittlere Fuß einen hinteren Träger (13) aufweist, der sich in der gleichen Ebene wie der mittlere Fuß erstreckt.

5. Hebe-/Nivellierungswerkzeug nach Anspruch 1, **dadurch gekennzeichnet, dass** die Hebewelle eine abgerundete Flachstange ist.

6. Hebe-/Nivellierungswerkzeug nach Anspruch 1, **dadurch gekennzeichnet, dass** eine Anfangsposition umfasst, dass der mittlere Fuß näher am Rahmen positioniert ist als der linke und rechte Fuß.

7. Hebe-/Nivellierungswerkzeug nach Anspruch 1, **dadurch gekennzeichnet, dass** der mittlere Fuß an jeder Seite nahe dem die Hälfte eines Kreises beschreibenden Schenkel eine Vertiefung (11a, 12a) aufweist und wobei sowohl der linke (8) als auch der rechte (10) Fuß an seiner jeweiligen rechten und linken Seite eine entsprechende Vertiefung (11b, 12b) aufweist.

8. Hebewerkzeug nach Anspruch 1, **dadurch gekennzeichnet, dass** alle Füße den gleichen Querschnitt aufweisen.

9. Hebewerkzeug nach Anspruch 1, **dadurch gekennzeichnet, dass** die Hebewelle einen Querschnitt ähnlich einem abgerundeten Rechteck aufweist, mit einer kürzeren Hinter- und Vorderseite und wobei die Längsseiten parallel zur einer Richtung von hinten nach vorne sind.

10. Hebewerkzeug nach Anspruch 1, **dadurch gekennzeichnet, dass** die Hebewelle an einer oder beiden Seiten eine gezackte Welle aufweist.

## Revendications

1. Outil de levage / de mise à niveau portatif, comprenant :
un arbre de levage (2) et un cadre (3) se déplaçant l'un par rapport à l'autre pendant l'action de levage,
un mécanisme de levage de pistolet à calfeutrer (1) fournissant l'action de levage,
dans lequel deux jambes extérieures (5, 7) fixées à l'un du cadre (3) et
de l'arbre de levage (2),
une jambe médiane (6) fixée à l'autre du cadre et de l'arbre de levage,
et étant positionnée entre la jambe extérieure (5, 7),
un pied (8, 9, 10) fixé à angle droit sur chaque jambe (5, 6, 7) et pointant
dans les mêmes directions,
dans lequel l'action de levage amène l'arbre de levage (2) à se déplacer vers le bas à travers le cadre (3).

2. Outil de levage / de mise à niveau selon la revendication 1, **caractérisé en ce que** les deux jambes extérieures (5, 7) sont fixées au cadre (3), et la première jambe médiane (6) est fixée à l'arbre de levage (2).

3. Outil de levage / de mise à niveau selon la revendication 1, **caractérisé en ce qu'une** plaque de support (14) est fixée au pied médian entourant les deux pieds extérieurs.

4. Outil de levage / de mise à niveau selon la revendication 1 et 2, **caractérisé en ce que** le pied médian présente un support arrière (13) s'étendant dans le même plan que le pied médian.

5. Outil de levage / de mise à niveau selon la revendication 1, **caractérisé en ce que** l'arbre de levage est une barre plate arrondie.

6. Outil de levage / de mise à niveau selon la revendication 1, **caractérisé en ce qu'**une position initiale comprend le pied médian étant positionné plus près du cadre que le pied gauche et droit.

7. Outil de levage / de mise à niveau selon la revendication 1, **caractérisé en ce que** le pied médian présente une encoche (11a, 12a) de chaque côté proche de la jambe décrivant un demi-cercle, et dans lequel chacun des pieds gauche (8) et droit (10) présente une encoche correspondante (11b, 12b) sur leurs côtés droit et gauche respectifs.

8. Outil de levage selon la revendication 1, **caractérisé en ce que** tous les pieds présentent la même section transversale.

9. Outil de levage selon la revendication 1, **caractérisé en ce que** l'arbre de levage présente une section transversale semblable à un rectangle arrondi avec un côté arrière et avant plus court, et dans lequel les côtés plus longs sont parallèles à une direction arrière vers avant.

10. Outil de levage selon la revendication 1, **caractérisé en ce que** l'arbre de levage présente un bord dentelé sur un ou sur les deux côtés.
